# EUROPEAN PATENT APPLICATION

(11) **EP 4 827 163 A1**
(43) Date of publication of application: **21.10.2026**
(21) Application number: 25738365.3
(22) Date of filing: 06.01.2025
(51) Int. Cl.: H04W 28/02

(54) **QUALITY OF SERVICE PARAMETER NOTIFICATION METHOD AND APPARATUS**

(30) Priority: 12.01.2024 CN 202410053786; 08.03.2024 CN 202410266437
(71) Applicant: Huawei Technologies Co., Ltd., Shenzhen, Guangdong 518129 (CN)
(72) Inventor: ZANG, Xin, Shenzhen, Guangdong 518129 (CN); NI, Hui, Shenzhen, Guangdong 518129 (CN)
(74) Representative: Grünecker Patent- und Rechtsanwälte PartG mbB
(86) International application number: PCT/CN2025/070785
(87) International publication number: WO 2025/148834

(57) **Abstract**

This application relates to the field of wireless communication technologies, and provides a quality of service parameter notification method and an apparatus, to determine a type of a quality of service parameter used by an access network device. In the method, a first communication apparatus receives first information from a second communication apparatus, where a quality of service profile corresponding to the first information includes a QoS flow-based quality of service parameter and a protocol data unit set-based quality of service parameter; and the first communication apparatus determines that a quality of service parameter used by the second communication apparatus is the QoS flow-based quality of service parameter or the protocol data unit set-based quality of service parameter. Based on the foregoing solution, the first communication apparatus may determine that the quality of service parameter used by the second communication apparatus is the QoS flow-based quality of service parameter or the protocol data unit set-based quality of service parameter, so that in a data flow transmission process, data flow handling can be performed with reference to the quality of service parameter used by the second communication apparatus.

## Description

### CROSS-REFERENCE TO RELATED APPLICATIONS

This application claims priorities to Chinese Patent Application No. 202410053786.7, filed with the China National Intellectual Property Administration on January 12, 2024 and entitled "QUALITY OF SERVICE PARAMETER NOTIFICATION METHOD AND APPARATUS", and to Chinese Patent Application No. 202410266437.3, filed with the China National Intellectual Property Administration on March 8, 2024 and entitled "QUALITY OF SERVICE PARAMETER NOTIFICATION METHOD AND APPARATUS", both of which are incorporated herein by reference in their entireties.

### TECHNICAL FIELD

This application relates to the field of wireless communication technologies, and in particular, to a quality of service parameter notification method and an apparatus.

### BACKGROUND

The development of a 5th generation (5th generation, 5G) mobile communication system has driven exponential growth of media services. Video services have become a dominant form of media, with emerging multimedia services such as 4K and 8K ultra-high definition video and extended reality (extended reality, XR). These emerging multimedia services pose great challenges to the network transmission bandwidth. Consequently, network transmission efficiency needs to be enhanced to meet rapidly evolving network service requirements of these services.

During the transmission of data flows, the concept of a protocol data unit (protocol data unit, PDU) set (set) has been proposed. Based on this concept, PDU set-based identification, PDU set-specific handling, and other related operations are implemented. A PDU set may include one or more PDUs, with each PDU carrying service payloads.

In related technologies, a scheme of alternative quality of service (quality of service, QoS) profiles (alternative QoS profiles) has been proposed. When a base station cannot fulfill QoS parameters included in a QoS profile, the base station selects an alternative QoS profile that can be fulfilled, and sends an identifier of the currently selected alternative QoS profile to a core network.

However, because the base station also supports PDU set-based QoS handling, the alternative QoS profile may contain both QoS flow-based QoS parameters and PDU set-based QoS parameters. In this case, the core network is unable to determine, based on the identifier of the alternative QoS profile sent by the base station, whether QoS parameters used by the base station is the PDU set-based QoS parameters or the QoS flow-based QoS parameters. A possible consequence is that a third-party application may fail to determine a current network status, and cannot make timely adjustment based on the network status.

### SUMMARY

This application provides a quality of service parameter notification method and an apparatus, to enable a core network device to determine a quality of service parameter and/or a type of the quality of service parameter used by an access network device for a service flow (for example, a quality of service flow, QoS flow), which can then be notified to a third-party application, to enable the third-party application to determine a current network status and make timely adjustment based on the network status. In a possible case, the core network device may also notify a terminal device of the quality of service parameter and/or the type of the quality of service parameter used by the access network device for the service flow.

According to a first aspect, a quality of service parameter notification method is provided. The method may be performed by a first communication apparatus. The first communication apparatus may be a core network device or a chip/chip system. In the method, the first communication apparatus receives first information from a second communication apparatus, where a quality of service profile (QoS profile or alternative QoS profile) corresponding to the first information includes a quality of service (quality of service, QoS) flow-based quality of service parameter (QoS parameter) and/or a protocol data unit set-based quality of service parameter (PDU set-based QoS parameter). The first communication apparatus determines a quality of service parameter used or fulfilled by the second communication apparatus for a service flow, or determines a type of the quality of service parameter used by the second communication apparatus. The following uses an example in which the first communication apparatus determines the quality of service parameter used by the second communication apparatus. The used quality of service parameter is a QoS flow-based quality of service parameter and/or a protocol data unit set-based quality of service parameter, and the type of the used quality of service parameter is a QoS flow-based quality of service parameter type and/or a protocol data unit set-based quality of service parameter type.

Based on the foregoing solution, the first communication apparatus may determine that the quality of service parameter used by the second communication apparatus is the QoS flow-based quality of service parameter and/or the protocol data unit set-based quality of service parameter included in the quality of service profile corresponding to the first information, so that in a data flow transmission process, data flow handling can be performed with reference to the quality of service parameter used by the second communication apparatus.

In a possible implementation, the first information sent by the second communication apparatus may correspond to at least one quality of service profile. Based on the foregoing solution, the first communication apparatus may determine at least one quality of service profile fulfilled by the second communication apparatus, and/or determine that the at least one fulfilled quality of service profile includes a quality of service parameter. Any fulfilled quality of service profile includes a quality of service flow-based quality of service parameter and/or a protocol data unit set-based quality of service parameter.

In a possible implementation, the second communication apparatus sends at least one piece of first information, and one piece of first information may correspond to one quality of service profile. Based on the foregoing solution, the first communication apparatus may determine at least one quality of service profile fulfilled by the second communication apparatus, and/or determine that the at least one fulfilled quality of service profile includes a quality of service parameter. Any fulfilled quality of service profile includes a quality of service flow-based quality of service parameter and/or a protocol data unit set-based quality of service parameter.

In a possible implementation, the first information sent by the second communication apparatus may also indicate a direction of the quality of service parameter used or fulfilled by the second communication apparatus for the service flow, or a direction of the type of the used quality of service parameter. For example, the first information indicates a direction of a quality of service parameter used or fulfilled by the second communication apparatus for an uplink direction of the service flow, or a direction of a type of the used quality of service parameter; or indicates a direction of a quality of service parameter used or fulfilled by the second communication apparatus for a downlink direction of the service flow, or a direction of a type of the used quality of service parameter.

In a possible implementation, the first communication apparatus sends the used quality of service parameter to a third communication apparatus. Based on the foregoing solution, the first communication apparatus may notify the third communication apparatus of the quality of service parameter used by the second communication apparatus, so that in a data flow transmission process, the third communication apparatus can learn of the quality of service parameter used by the second communication apparatus. The quality of service parameter used by the second communication apparatus includes a quality of service (quality of service, QoS) flow-based quality of service parameter (QoS parameter) and/or a protocol data unit set-based quality of service parameter (PDU set-based QoS parameter).

In a possible implementation, the first communication apparatus receives first indication information from the second communication apparatus, where the first indication information indicates that the second communication apparatus supports protocol data unit set-based quality of service handling. The first communication apparatus determines, based on the first indication information, that the quality of service parameter used by the second communication apparatus includes the protocol data unit set-based quality of service parameter.

Based on the foregoing solution, if the first indication information indicates that the second communication apparatus supports the protocol data unit set-based quality of service handling (PDU set-based QoS handling), the first communication apparatus can determine that the quality of service parameter used by the second communication apparatus includes the protocol data unit-based quality of service parameter, and the protocol data unit-based quality of service parameter is the protocol data unit-based quality of service parameter in the quality of service profile corresponding to the first information.

In a possible implementation, the first communication apparatus does not receive first indication information from the second communication apparatus, where the first indication information indicates that the second communication apparatus supports protocol data unit set-based quality of service handling. The first communication apparatus determines that the quality of service parameter used by the second communication apparatus is the QoS flow-based quality of service parameter. Alternatively, the first communication apparatus receives second indication information from the second communication apparatus, where the second indication information indicates that the second communication apparatus does not support the protocol data unit set-based quality of service handling. The first communication apparatus determines, based on the second indication information, that the quality of service parameter used by the second communication apparatus is the QoS flow-based quality of service parameter.

Based on the foregoing solution, if the first communication apparatus does not receive the first indication information or receives the second indication information, the first communication apparatus can determine that the second communication apparatus does not support the protocol data unit set-based quality of service handling, and the first communication apparatus can determine that the quality of service parameter used by the second communication apparatus is the QoS flow-based quality of service parameter in the quality of service profile corresponding to the first information.

In a possible implementation, the first information indicates that the used quality of service parameter is the QoS flow-based quality of service parameter, the first information indicates that the used quality of service parameter is the protocol data unit set-based quality of service parameter, or the first information indicates that the used quality of service parameters are the QoS flow-based quality of service parameter and the protocol data unit set-based quality of service parameter.

Based on the foregoing solution, in addition to indicating a quality of service profile used by the second communication apparatus, the first information may also indicate that the quality of service parameter used by the second communication apparatus is the QoS flow-based quality of service parameter and/or the protocol data unit set-based quality of service parameter. Therefore, the first communication apparatus can determine, based on the first information sent by the second communication apparatus, that the quality of service parameter used by the second communication apparatus is the QoS flow-based quality of service parameter and/or the protocol data unit set-based quality of service parameter.

In a possible implementation, the first communication apparatus includes a session management function network element. Based on the foregoing solution, the session management function network element may receive the first information from the second communication apparatus, and determine that the quality of service parameter used by the second communication apparatus is the QoS flow-based quality of service parameter and/or the protocol data unit set-based quality of service parameter.

In a possible manner, if the session management function network element receives first information or first indication information of an access network device, the SMF may determine a QoS parameter included in a quality of service profile used by the access network device and corresponding to the first information. For example, if the QoS parameters included in the quality of service profile corresponding to the first information are the QoS flow-based QoS parameter and the PDU set-based QoS parameter, in a possible manner, the access network device replaces the QoS flow-based QoS parameter (if there is a corresponding alternative QoS flow-based QoS parameter) in the corresponding quality of service profile with the corresponding PDU set-based QoS parameter. For example, if the corresponding quality of service profile includes a packet delay budget (PDB) and a PDU set delay budget (PSDB), the access network device replaces the packet delay budget with the PDU set delay budget. If the corresponding quality of service profile includes a PDU set error rate (PDU set error rate, PSER) and no packet error rate (packet error rate, PER), or if the corresponding quality of service profile includes the packet error rate and no PDU set error rate, the access network device uses the included parameter as the quality of service parameter. In this case, the session management function network element may determine that the QoS parameters included in the quality of service profile used by the access network device are the QoS flow-based QoS parameter and the PDU set-based QoS parameter. For example, the access network device uses the PDU set delay budget (PSDB) and the packet error rate (packet error rate, PER). The (PDU set) delay budget and the (PDU set) error rate are merely examples for description, and any QoS flow-based QoS parameter and PDU set-based QoS parameter may be used in specific implementations. For another example, the QoS parameter included in the quality of service profile corresponding to the first information is the PDU set-based QoS parameter. In this case, the session management function network element may determine that a QoS parameter included in a quality of service profile fulfilled by the access network device is the PDU set-based QoS parameter. For another example, the QoS parameter included in the quality of service profile corresponding to the first information is the QoS flow-based QoS parameter. In this case, the session management function network element may determine that a QoS parameter included in a quality of service profile fulfilled by the access network device is the QoS flow-based QoS parameter.

In a possible manner, if the session management function network element receives the first information or the first indication information of the access network device, the SMF may determine a QoS parameter included in at least one quality of service profile fulfilled by the access network device and corresponding to the first information. For example, quality of service profiles corresponding to the first information are a QoS profile 1 and a QoS profile 2. The QoS profile 1 includes a QoS flow-based QoS parameter, and the QoS profile 2 includes a PDU set-based QoS parameter. In this case, the session management function network element may determine that QoS parameters included in the quality of service profiles fulfilled by the access network device are the QoS flow-based QoS parameter and the PDU set-based QoS parameter.

In a possible implementation, the first communication apparatus includes the session management function network element and a policy control function network element, and the session management function network element receives the first information or the first indication information from the second communication apparatus. The session management function network element sends one or more of the used quality of service parameter, the type of the used quality of service parameter, or the first information to the policy control function network element. The type of the used quality of service parameter includes the QoS flow-based quality of service parameter type and/or the protocol data unit set-based quality of service parameter type.

Based on the foregoing solution, the session management function network element may indicate, to the policy control function network element, that the quality of service parameter used by the second communication apparatus is the QoS flow-based quality of service parameter and/or the protocol data unit set-based quality of service parameter, so that in a data flow transmission process, the policy control function network element can learn of the quality of service parameter used by the second communication apparatus for QoS flow handling.

In an example, if the first information corresponds to the quality of service profile, the session management function network element sends, to the policy control function network element, the first information and the type of the quality of service parameter used by the second communication apparatus, or the session management function network element sends, to the policy control function network element, the quality of service parameter used by the second communication apparatus.

In another example, if the first information indicates that the quality of service parameter used by the second communication apparatus is the QoS flow-based quality of service parameter and/or the protocol data unit set-based quality of service parameter, the session management function network element sends the first information to the policy control function network element.

In another example, if the first indication information indicates that the second communication apparatus supports the protocol data unit set-based quality of service handling, the session management function network element may indicate, to the policy control function network element, that the second communication apparatus supports the protocol data unit set-based quality of service handling, or send the first indication information to the policy control function network element. The policy control function network element may determine that the QoS parameter included in the quality of service profile used by the access network device and corresponding to the first information is the QoS flow-based quality of service parameter and/or the protocol data unit set-based quality of service parameter. A specific determining manner is the same as a determining manner of the session management function network element.

In a possible implementation, the first communication apparatus further includes an application function network element, and the policy control function network element sends one or more of the quality of service parameter, the type of the quality of service parameter, or the first information to the application function network element.

Based on the foregoing solution, the policy control function network element sends one or more of the quality of service parameter, the type of the quality of service parameter, or the first information to the application function network element, so that in a data flow transmission process, the application function network element can learn of the quality of service parameter used by the second communication apparatus for data flow scheduling.

In an example, if the first information corresponds to the quality of service profile, the policy control function network element sends, to the application function network element, the first information and the type of the quality of service parameter used by the second communication apparatus, or the policy control function network element sends, to the application function network element, the quality of service parameter used by the second communication apparatus.

In another example, if the first information indicates that the quality of service parameter used by the second communication apparatus is the QoS flow-based quality of service parameter and/or the protocol data unit set-based quality of service parameter, the policy control function network element sends the first information to the application function network element.

In a possible implementation, the policy control function network element directly sends the first information to the application function network element or sends the first information to the application function network element via a network exposure function network element.

In a possible implementation, the first information received by the application function network element may be the first information sent by the session management network element, or may be the first information mapped via the network exposure function network element.

In a possible implementation, the first communication apparatus includes the application function network element and the policy control function network element, and the application function network element sends second information to the policy control function network element, where the second information includes one or more protocol data unit set-based quality of service requirements and/or one or more QoS flow-based quality of service requirements. The policy control function network element determines one or more quality of service profiles based on the one or more protocol data unit set-based quality of service requirements and/or the one or more QoS flow-based quality of service requirements.

Based on the foregoing solution, the application function network element may send the one or more protocol data unit set-based quality of service requirements and/or the one or more QoS flow-based quality of service requirements to the policy control function network element. Therefore, the policy control function network element can determine the one or more quality of service profiles, so that the second communication apparatus can select a quality of service profile from the one or more service profiles for data flow handling.

In a possible implementation, the first communication apparatus further includes a network capability exposure function network element, and the application function network element sends the second information to the policy control function network element via the network capability exposure function network element.

In a possible implementation, the first communication apparatus further includes the session management function network element, and the policy control function network element sends, to the session management function network element, the one or more quality of service profiles and the first information corresponding to the one or more quality of service profiles. The session management function sends, to the second communication apparatus, the one or more quality of service profiles and the first information corresponding to the one or more quality of service profiles.

Based on the foregoing solution, the policy control function network element sends the determined one or more quality of service profiles and the corresponding first information to the session management function network element, so that the second communication apparatus can select a quality of service profile from the one or more quality of service profiles for data flow handling.

In a possible implementation, the protocol data unit set-based quality of service parameter includes one or more of the following: a protocol data unit set delay budget (PDU set delay budget, PSDB), a protocol data unit set error rate (PDU set error rate, PSER), and protocol data unit set integrated handling information (PDU set integrated handling information, PSIHI).

According to a second aspect, a quality of service parameter notification method is provided. The method may be performed by a second communication apparatus. The second communication apparatus may be an access network device or a chip/chip system. In the method, the second communication apparatus receives one or more quality of service profiles from a first communication apparatus. One quality of service profile corresponds to one piece of first information and includes one or more quality of service parameters, and the one or more quality of service parameters include a quality of service QoS flow-based quality of service parameter and/or a protocol data unit set-based quality of service parameter. The second communication apparatus sends the first information to the first communication apparatus.

In a possible implementation, the one or more quality of service profiles sent by the first communication apparatus are one or more quality of service profiles for a service flow handled by the second communication apparatus. Optionally, the one or more quality of service profiles are one or more quality of service profiles for an uplink service flow handled by the second communication apparatus or one or more quality of service profiles for a downlink service flow handled by the second communication.

In a possible implementation, the first information corresponds to one or more quality of service profiles.

In a possible implementation, the second communication apparatus sends one or more pieces of first information to the first communication apparatus.

In a possible implementation, the second communication apparatus sends first indication information to the first communication apparatus, where the first indication information indicates that the second communication apparatus supports protocol data unit set-based quality of service handling.

In a possible implementation, the second communication apparatus sends second indication information to the first communication apparatus, where the second indication information indicates that the second communication apparatus does not support protocol data unit set-based quality of service handling.

In a possible implementation, the first information indicates that a quality of service parameter used by the second communication apparatus is the quality of service QoS flow-based quality of service parameter in the quality of service profile corresponding to the first information. Alternatively, the first information indicates that the quality of service parameter used by the second communication apparatus is the protocol data unit set-based quality of service parameter in the quality of service profile corresponding to the first information, or the first information indicates that the quality of service parameters used by the second communication apparatus are the protocol data unit set-based quality of service parameter and the quality of service QoS flow-based quality of service parameter in the quality of service profile corresponding to the first information. In a possible implementation, the protocol data unit set-based quality of service parameter includes one or more of the following: a protocol data unit set delay budget PSDB, a protocol data unit set error rate PSER, and protocol data unit set integrated handling information PSIHI.

According to a third aspect, a quality of service parameter notification method is provided. The method may be performed by a policy control function network element, or may be performed by a chip/chip system. In the method, the policy control function network element receives third indication information from a session management function network element, where the third indication information indicates whether a second communication apparatus supports protocol data unit set-based quality of service handling. The policy control function network element sends one or more quality of service profiles to the second communication apparatus. One quality of service profile corresponds to one piece of first information and includes one or more quality of service parameters, and the one or more quality of service parameters include a quality of service QoS flow-based quality of service parameter and/or a protocol data unit set-based quality of service parameter.

Based on the foregoing solution, the policy control function network element may determine the one or more quality of service profiles based on the third indication information from the session management function network element, so that the second communication apparatus can select a quality of service profile and a quality of service parameter from the one or more quality of service profiles for data flow handling.

In a possible implementation, the third indication information indicates that the second communication apparatus does not support the protocol data unit set-based quality of service handling, and the one or more quality of service profiles include the QoS flow-based quality of service parameter. Alternatively, the third indication information indicates that the second communication apparatus supports the protocol data unit set-based quality of service handling, and the one or more quality of service profiles include the protocol data unit set-based quality of service parameter, or the one or more quality of service profiles include the protocol data unit set-based quality of service parameter and the QoS flow-based quality of service parameter.

In a possible implementation, the policy control function network element receives, from the session management function network element, one or more of a quality of service parameter used by the second communication apparatus, a type of the quality of service parameter used by the second communication apparatus, or the first information. The type of the used quality of service parameter includes a QoS flow-based quality of service parameter type and/or a protocol data unit set-based quality of service parameter type.

Based on the foregoing solution, the policy control function network element may receive, from the session management function network element, one or more of the quality of service parameter used by the second communication apparatus, the type of the quality of service parameter used by the second communication apparatus, or the first information, to learn of the quality of service parameter used by the second communication apparatus.

According to a fourth aspect, a communication apparatus is provided, including a processing unit and a transceiver unit.

The transceiver unit is configured to receive first information from a second communication apparatus, where a quality of service profile (QoS profile or alternative QoS profile) corresponding to the first information includes a quality of service (quality of service, QoS) flow-based quality of service parameter (QoS parameter) and/or a protocol data unit set-based quality of service parameter (PDU set-based QoS parameter). The processing unit is configured to determine a quality of service parameter used or fulfilled by the second communication apparatus, or determine a type of the quality of service parameter used by the second communication apparatus. The following uses an example in which the processing unit is configured to determine the quality of service parameter used by the second communication apparatus. The used quality of service parameter is a QoS flow-based quality of service parameter and/or a protocol data unit set-based quality of service parameter, and the type of the used quality of service parameter is a QoS flow-based quality of service parameter type and/or a protocol data unit set-based quality of service parameter type.

In a possible implementation, the transceiver unit is further configured to send the used quality of service parameter to a third communication apparatus. The quality of service parameter used by the second communication apparatus includes a quality of service (quality of service, QoS) flow-based quality of service parameter (QoS parameter) and/or a protocol data unit set-based quality of service parameter (PDU set-based QoS parameter).

In a possible implementation, the transceiver unit is further configured to receive first indication information from the second communication apparatus, where the first indication information indicates that the second communication apparatus supports protocol data unit set-based quality of service handling. The processing unit is specifically configured to determine, based on the first indication information, that the quality of service parameter used by the second communication apparatus includes the protocol data unit set-based quality of service parameter.

In a possible implementation, no first indication information is received from the second communication apparatus, where the first indication information indicates that the second communication apparatus supports protocol data unit set-based quality of service handling. The processing unit is specifically configured to determine that the quality of service parameter used by the second communication apparatus is the QoS flow-based quality of service parameter. Alternatively, the transceiver unit is further configured to receive second indication information from the second communication apparatus, where the second indication information indicates that the second communication apparatus does not support the protocol data unit set-based quality of service handling. The processing unit is specifically configured to determine, based on the second indication information, that the quality of service parameter used by the second communication apparatus is the QoS flow-based quality of service parameter.

In a possible implementation, the first information indicates that the used quality of service parameter is the QoS flow-based quality of service parameter, the first information indicates that the used quality of service parameter is the protocol data unit set-based quality of service parameter, or the first information indicates that the used quality of service parameters are the QoS flow-based quality of service parameter and the protocol data unit set-based quality of service parameter.

In a possible implementation, the first communication apparatus includes a session management function network element.

In a possible implementation, the first communication apparatus includes the session management function network element and a policy control function network element, and the session management function network element receives the first information from the second communication apparatus. The session management function network element sends one or more of the used quality of service parameter, the type of the used quality of service parameter, or the first information to the policy control function network element. The type of the used quality of service parameter includes the QoS flow-based quality of service parameter type and/or the protocol data unit set-based quality of service parameter type.

In an example, if the first information corresponds to the quality of service profile, the session management function network element sends, to the policy control function network element, the first information and the type of the quality of service parameter used by the second communication apparatus, or the session management function network element sends, to the policy control function network element, the quality of service parameter used by the second communication apparatus.

In another example, if the first information indicates that the quality of service parameter used by the second communication apparatus is the QoS flow-based quality of service parameter and/or the protocol data unit set-based quality of service parameter, the session management function network element sends the first information to the policy control function network element.

In a possible implementation, the first communication apparatus further includes an application function network element, and the policy control function network element sends one or more of the quality of service parameter, the type of the quality of service parameter, or the first information to the application function network element.

In an example, if the first information corresponds to the quality of service profile, the policy control function network element sends, to the application function network element, the first information and the type of the quality of service parameter used by the second communication apparatus, or the policy control function network element sends, to the application function network element, the quality of service parameter used by the second communication apparatus and the type of the quality of service parameter used by the second communication apparatus.

In another example, if the first information indicates that the quality of service parameter used by the second communication apparatus is the QoS flow-based quality of service parameter or the protocol data unit set-based quality of service parameter, the policy control function network element sends the first information to the application function network element.

In a possible implementation, the policy control function network element directly sends the first information to the application function network element or sends the first information to the application function network element via a network exposure function network element.

In a possible implementation, the first information received by the application function network element may be the first information sent by the session management network element, or may be the first information mapped via the network exposure function network element.

In a possible implementation, the first communication apparatus includes the application function network element and the policy control function network element, and the application function network element sends second information to the policy control function network element, where the second information includes one or more protocol data unit set-based quality of service requirements and/or one or more QoS flow-based quality of service requirements. The policy control function network element determines one or more quality of service profiles based on the one or more protocol data unit set-based quality of service requirements and the one or more QoS flow-based quality of service requirements.

In a possible implementation, the first communication apparatus further includes a network capability exposure function network element, and the application function network element sends the second information to the policy control function network element via the network capability exposure function network element.

In a possible implementation, the first communication apparatus further includes the session management function network element, and the policy control function network element sends, to the session management function network element, the one or more quality of service profiles and the first information corresponding to the one or more quality of service profiles. The session management function sends, to the second communication apparatus, the one or more quality of service profiles and the first information corresponding to the one or more quality of service profiles.

In a possible implementation, the protocol data unit set-based quality of service parameter includes one or more of the following: a protocol data unit set delay budget, a protocol data unit set error rate, and protocol data unit set integrated handling information.

According to a fifth aspect, a communication apparatus is provided, including a processing unit and a transceiver unit.

The transceiver unit is configured to receive one or more quality of service profiles from a first communication apparatus. One quality of service profile corresponds to one piece of first information and includes one or more quality of service parameters, and the one or more quality of service parameters include a quality of service QoS flow-based quality of service parameter and a protocol data unit set-based quality of service parameter. The processing unit is configured to determine the first information. The transceiver unit is configured to send the first information to the first communication apparatus.

In a possible implementation, the transceiver unit is further configured to send first indication information to the first communication apparatus, where the first indication information indicates that the communication apparatus supports protocol data unit set-based quality of service handling.

In a possible implementation, the transceiver unit is further configured to send second indication information to the first communication apparatus, where the second indication information indicates that the communication apparatus does not support protocol data unit set-based quality of service handling.

In a possible implementation, the first information indicates that a quality of service parameter used by the communication apparatus is the quality of service QoS flow-based quality of service parameter in the one or more quality of service parameters included in the quality of service profile corresponding to the first information. Alternatively, the first information indicates that the quality of service parameter used by the communication apparatus is the protocol data unit set-based quality of service parameter in the one or more quality of service parameters included in the quality of service profile corresponding to the first information.

In a possible implementation, the protocol data unit set-based quality of service parameter includes one or more of the following: a protocol data unit set delay budget, a protocol data unit set error rate, and protocol data unit set integrated handling information.

According to a sixth aspect, a communication apparatus is provided, including a processing unit and a transceiver unit.

The transceiver unit is configured to receive third indication information from a session management function network element, where the third indication information indicates whether a second communication apparatus supports protocol data unit set-based quality of service handling. The processing unit is configured to determine one or more quality of service profiles. The transceiver unit is further configured to send the one or more quality of service profiles to the second communication apparatus. One quality of service profile corresponds to one piece of first information and includes one or more quality of service parameters, and the one or more quality of service parameters include a quality of service QoS flow-based quality of service parameter and/or a protocol data unit set-based quality of service parameter.

In a possible implementation, the third indication information indicates that the second communication apparatus does not support the protocol data unit set-based quality of service handling, and the one or more quality of service profiles include the QoS flow-based quality of service parameter. Alternatively, the third indication information indicates that the second communication apparatus supports the protocol data unit set-based quality of service handling, and the one or more quality of service profiles include the protocol data unit set-based quality of service parameter, or the one or more quality of service profiles include the protocol data unit set-based quality of service parameter and the QoS flow-based quality of service parameter.

In a possible implementation, the transceiver unit is further configured to receive, from the session management function network element, one or more of a quality of service parameter used by the second communication apparatus, a type of the quality of service parameter used by the second communication apparatus, or the first information. The type of the used quality of service parameter includes a QoS flow-based quality of service parameter type or a protocol data unit set-based quality of service parameter type.

According to a seventh aspect, this application provides a communication system. The communication system may include the first communication apparatus that performs the method according to the first aspect and the second communication apparatus that performs the method according to the second aspect. Alternatively, the communication system may include the policy control function network element and the session management function network element that perform the method according to the third aspect.

According to an eighth aspect, this application provides a computer-readable storage medium. The computer storage medium stores computer-readable instructions. When a computer reads and executes the computer-readable instructions, the computer is caused to perform the method in any possible implementation according to any one of the first aspect to the third aspect.

According to a ninth aspect, this application provides a computer program product. When a computer reads and executes the computer program product, the computer is caused to perform the method in any possible implementation according to any one of the first aspect to the third aspect.

According to a tenth aspect, this application provides a chip. The chip is configured to read a computer program stored in a memory, to perform the method in any possible implementation according to any one of the first aspect to the third aspect.

For technical effects that can be achieved in any one of the fourth aspect to the tenth aspect, refer to descriptions of technical effects that can be achieved in any possible implementation according to any one of the first aspect to the third aspect. Details are not described herein again.

### BRIEF DESCRIPTION OF DRAWINGS

FIG. 1 is a diagram of an architecture of a communication system according to an embodiment of this application;
FIG. 2 is a diagram of a PDU set-based handling process according to an embodiment of this application;
FIG. 3 is a diagram of an alternative QoS profile notification method according to an embodiment of this application;
FIG. 4 is an example flowchart of a quality of service parameter notification method according to an embodiment of this application;
FIG. 5 is an example flowchart of another quality of service parameter notification method according to an embodiment of this application;
FIG. 6 is an example flowchart of another quality of service parameter notification method according to an embodiment of this application;
FIG. 7 is an example flowchart of another quality of service parameter notification method according to an embodiment of this application;
FIG. 8 is an example flowchart of another quality of service parameter notification method according to an embodiment of this application;
FIG. 9 is a diagram of a communication apparatus according to an embodiment of this application;
FIG. 10 is a diagram of another communication apparatus according to an embodiment of this application;
FIG. 11 is a diagram of another communication apparatus according to an embodiment of this application; and
FIG. 12 is a diagram of another communication apparatus according to an embodiment of this application.

### DESCRIPTION OF EMBODIMENTS

The following describes an architecture of a communication system to which a method provided in this application is applied.

The technical solutions in embodiments of this application may be applied to a new radio (new radio, NR) system, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a next generation, for example, 6G, wireless communication system, and the like. This is not limited herein.

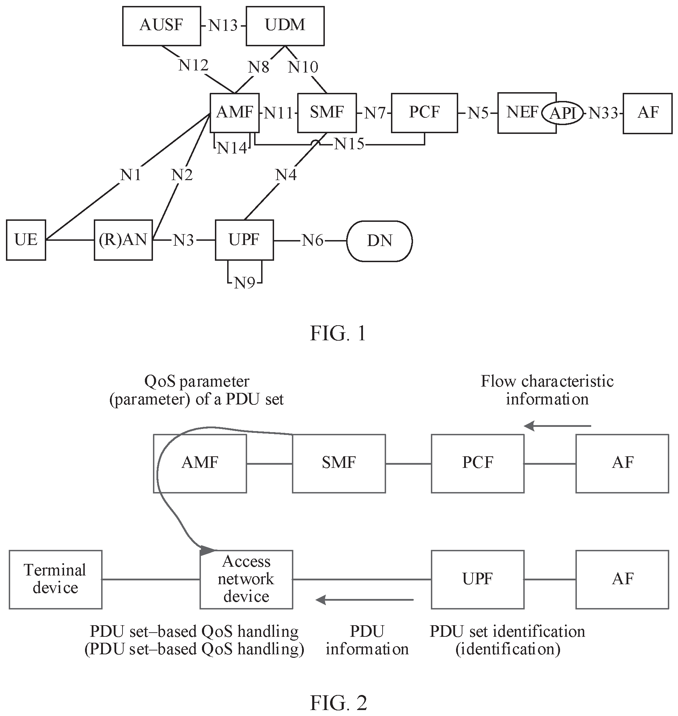

FIG. 1 is a diagram of an architecture of a communication system to which an embodiment of this application is applicable, and shows a 5th generation (the 5th generation, 5G) network architecture based on a service-based architecture. As shown in FIG. 1, the communication system may include three parts: a terminal part, an operator network part, and a data network (data network, DN). The following describes functions of some network elements.

A terminal may also be referred to as a terminal device (terminal device) or user equipment (user equipment, UE), the terminal is a device having a wireless transceiver function, and may be deployed on land, including an indoor device, an outdoor device, a handheld device, or a vehicle-mounted device; may be deployed on a water surface (for example, on a ship); or may be deployed in the air (for example, on an aircraft, a balloon, or a satellite). The terminal may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), or the like.

The terminal may establish a connection to the operator network through an interface (for example, N1) provided by the operator network, and use services such as a data service and/or a voice service provided by the operator network. The terminal may further access the DN through the operator network, and use an operator service deployed on the DN and/or a service provided by a third party. The third party may be a service party other than the operator network and the terminal, and may provide services such as a data service and/or a voice service for the terminal. A specific representation form of the third party may be specifically determined based on an actual application scenario, and is not limited herein.

The operator network may be a network deployed by an operator, and may include an access network device and a core network device. In a possible implementation method, the operator network further includes an AF network element. Alternatively, the AF network element may not belong to the operator network, but belongs to the third party.

The access network device is a device in a wireless network. The access network device may be an apparatus that is in a radio access network (radio access network, RAN) and that provides a wireless communication function for the terminal device, and is referred to as a RAN device. For example, the access network device may be a base station (base station), an evolved NodeB (evolved NodeB, eNodeB), a transmission reception point (transmission reception point, TRP), a next-generation NodeB (next-generation NodeB, gNB) in a 5th generation (5th generation, 5G) mobile communication system, a next-generation NodeB in a 6th generation (6th generation, 6G) mobile communication system, a base station in a future mobile communication system, an access node in a Wi-Fi system, or the like; or may be a module or a unit that completes some functions of a base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete a part or all of functions of a physical layer. For detailed descriptions of the foregoing protocol layers, refer to related technical specifications of the 3rd generation partnership project (3rd generation partnership project, 3GPP). The access network device may be a macro base station, may be a micro base station or an indoor base station, or may be a relay node, a donor node, or the like. A specific technology and a specific device form used by the access network device are not limited in embodiments of this application.

In another possible scenario, a plurality of RAN nodes collaborate to assist the terminal in implementing radio access, and different RAN nodes respectively implement some functions of the base station. For example, the RAN node may be a CU, a DU, a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

The core network device may include at least one of the following network elements: a mobility management network element, a session management network element, a user plane network element (for example, a user plane function (user plane function, UPF) network element), a data management network element (for example, a unified data management (unified data management, UDM) network element), a unified data repository (unified data repository, UDR) network element, a network exposure network element (for example, a network exposure function (network exposure function, NEF) network element), a policy control network element (for example, a policy control function (policy control function, PCF) network element), an authentication function network element (for example, an authentication server function (authentication server function, AUSF) network element), and the like. The following separately describes some network elements.

In this application, an access and mobility management function (access and mobility management function, AMF) network element, which may also be referred to as an access and mobility management function device, is a control plane network element provided by the operator network, is responsible for access control and mobility management of the terminal accessing the operator network, and may be configured to implement another function in a mobility management entity (mobility management entity, MME) function other than session management, for example, lawful interception, or access authorization (or authentication), user equipment registration, mobility management, a tracking area update procedure, reachability detection, and selection of a session management network element, and mobility state transition management. In 5G, the mobility management network element may be an access and mobility management function network element. In future communication such as 6G, the mobility management network element may still be an AMF, or may be referred to by another name. This is not limited in this application. The AMF is used as an example for description below.

In this application, a session management function (session management function, SMF) network element, which may also be referred to as a session management function device, is a control plane network element provided by the operator network, and is responsible for managing a protocol data unit (protocol data unit, PDU) session of the terminal. The PDU session is a channel used for transmission of a PDU, and the terminal and the DN need to perform transmission of PDUs to each other through the PDU session. The SMF network element is responsible for establishment, maintenance, deletion, and the like of the PDU session. Functions of the session management network element include session management (for example, session establishment, modification, and release, including maintenance of a tunnel between a user plane network element and the access network device), selection and control of the user plane network element, service and session continuity (service and session continuity, SSC) mode selection, roaming, and the like. In 5G, the session management network element may be a session management function network element. In future communication such as 6G, the session management network element may still be an SMF, or may be a network element that is referred to by another name but has all or some functions of the session management network element. This is not limited in this application. The SMF is used as an example for description below.

In this application, a user plane function network element, which may also be referred to as a user plane function device, is a user plane network element provided by the operator, and is responsible for packet routing and forwarding, policy implementation, traffic reporting, and quality of service (quality of service, QoS) handling. In 5G, the user plane function network element may be a user plane function network element. In future communication such as 6G, the user plane function network element may still be a UPF, or may be a network element that is referred to by another name but has all or some functions of the session management network element. This is not limited in this application. The UPF is used as an example for description below.

In this application, a network exposure function network element may securely expose a service and a capability provided by a 3rd generation partnership project (3rd generation partnership project, 3GPP) network function to, for example, a third party, edge computing, or an AF.

In embodiments of this application, a communication apparatus configured to implement functions of the access network device, the terminal, or the core network device may be the access network device, the terminal, or the core network device, or may be an apparatus that supports the access network device, the terminal, or the core network device in implementing the functions, for example, a chip system. The apparatus may be installed in the access network device, the terminal, or the core network device. In the technical solutions provided in embodiments of this application, the apparatus for implementing the functions of the access network device is described as access network device, the apparatus for implementing the functions of the terminal is described as terminal, and the apparatus for implementing the functions of the core network device is described as core network device, by way of example, to describe the technical solutions provided in embodiments of this application.

The DN is a network outside the operator network. The operator network may access a plurality of DNs, and a plurality of services may be deployed on the DN, to provide services such as a data service and/or a voice service for the terminal. For example, the DN is a private network of an intelligent factory, a sensor installed in a workshop of the intelligent factory may be the terminal, a control server of the sensor is deployed in the DN, and the control server can provide a service for the sensor. The sensor may communicate with the control server, to obtain instructions of the control server, transmit collected sensor data to the control server according to the instructions, and the like. For another example, the DN is an internal office network of a company, a mobile phone or a computer of an employee in the company may be the terminal, and the mobile phone or the computer of the employee can access information, a data resource, or the like on the internal office network of the company.

In FIG. 1, N1, N2, N3, N4, and the like are interface serial numbers. For meanings of these interface serial numbers, refer to meanings defined in 3GPP standard protocols. This is not limited herein.

The development of 5G drives exponential growth of media services. Video services have become a dominant form of media, with emerging multimedia services such as 4K and 8K ultra-high definition video and extended reality (extended reality, XR). These emerging multimedia services pose great challenges to the network transmission bandwidth. The network transmission efficiency needs to be improved to meet rapidly evolving service demands on a network.

In a current QoS flow handling process, the AF may provide the PCF with flow characteristic information related to a QoS flow, for example, a protocol description (protocol description), a QoS requirement (requirement) of the QoS flow, or a QoS parameter. The PCF generates a policy and charging control rule (policy and charging control rule, PCC rule) for the QoS flow based on the information provided by the AF, and sends the generated PCC rule to the SMF. The SMF generates a QoS profile (profile) of the QoS flow according to the PCC rule, and sends the QoS profile to the access network device. The QoS profile of the QoS flow may include one or more QoS parameters of the QoS flow. The access network device performs QoS flow-based QoS handling based on the received QoS profile of the QoS flow.

In a data flow transmission process, protocol data unit (protocol data unit, PDU) set (set)-based identification and PDU set-specific handling are performed. A PDU set may include one or more PDUs, and the PDU is a protocol data unit.

Refer to FIG. 2. The AF may provide the PCF with flow characteristic information related to a PDU set, for example, a protocol description (protocol description) and a QoS requirement or a QoS parameter. The QoS requirement/QoS parameter is based on the PDU set. The PCF generates a policy and charging control rule (policy and charging control rule, PCC rule) based on the information provided by the AF, and sends the generated PCC rule to the SMF. The SMF generates a QoS profile of the PDU set according to the PCC rule, and sends the QoS profile to the access network device. The access network device performs PDU set-based QoS handling (PDU set-based handling) based on the received QoS profile of the PDU set. The SMF may further generate a detection rule for the PDU set according to the PCC rule, and send the detection rule for the PDU set to the UPF. After receiving data packets, the UPF may identify data packets that belong to a same PDU set, include PDU set information (PDU set information) in a general packet radio service tunneling protocol (general packet radio service tunneling protocol, GTP-U), and transfer related information of the PDU set to the access network device.

In embodiments of this application, the QoS profile of the PDU set may include one or more QoS requirements/QoS parameters of the PDU set, for example, may include one or more of the following: a PDU set delay budget (PDU set delay budget, PSDB), a PDU set error rate (PDU set error rate, PSER), or PDU set integrated handling information (PDU set integrated handling information, PSIHI).

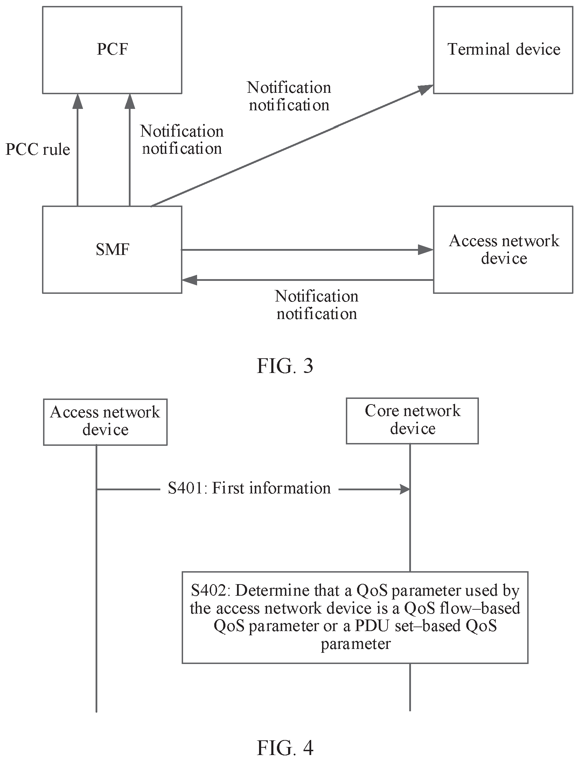

Refer to FIG. 3. The SMF may generate a QoS profile and an alternative QoS profile according to the PCC rule provided by the PCF. The QoS profile may include a plurality of QoS flow-based QoS parameters, and the alternative QoS profile may also include a plurality of QoS flow-based QoS parameters. The SMF may send the QoS profile and the alternative QoS profile to the access network device. In a data transmission process, when the access network device fail to fulfill the QoS parameter included in the QoS profile, the access network device selects, based on priorities, an alternative QoS profile that can be fulfilled, and sends a notification to the SMF, where content of the notification is an identifier (reference) corresponding to the currently selected alternative QoS profile. After receiving the notification from the access network device, the SMF sends notifications (notification) to the PCF and the terminal device. The notification sent to the PCF is the reference of the alternative QoS profile, and the notification sent to the terminal device is a QoS flow-based QoS parameter used by the access network device.

However, it can be learned from the foregoing content that, for PDU set-specific handling, the SMF generates a PDU set-based QoS parameter. The alternative QoS profile includes the QoS flow-based QoS parameter and the PDU set-based QoS parameter. The SMF cannot determine, based on the reference of the alternative QoS profile sent by the access network device for example, the reference, whether the QoS parameter used by the access network device is the QoS flow-based QoS parameter or the PDU set-based QoS parameter.

In view of this, an embodiment of this application provides a quality of service parameter notification method, to determine that the QoS parameter used by the access network device is the QoS flow-based quality of service parameter and/or the PDU set-based quality of service parameter. The following descriptions are provided with reference to FIG. 4.

FIG. 4 is an example flowchart of a quality of service parameter notification method according to an embodiment of this application. The method may include the following operations. The embodiment shown in FIG. 4 may be performed by a first communication apparatus and a second communication apparatus. In the embodiment shown in FIG. 4, an example in which the first communication apparatus is a core network device and the second communication apparatus is an access network device is used for description.

S401: The access network device sends first information to the core network device.

Correspondingly, the core network device receives the first information from the access network device.

The first information may correspond to a quality of service profile. It may be understood that the quality of service profile here may be understood as an alternative QoS profile (alternative QoS profile). The quality of service profile corresponding to the first information includes a QoS flow-based QoS parameter and/or a PDU set-based QoS parameter. For example, the quality of service profile corresponding to the first information includes the QoS flow-based QoS parameter. For another example, the quality of service profile corresponding to the first information includes the PDU set-based QoS parameter. For another example, the quality of service profile corresponding to the first information includes the QoS flow-based QoS parameter and the PDU set-based QoS parameter. The first information in this embodiment of this application may be understood as an index or an identifier of the quality of service profile, for example, the reference described above.

Optionally, as shown in FIG. 3, when the access network device does not fulfill a QoS parameter included in a QoS profile (QoS profile), the access network device selects an alternative QoS profile (alternative QoS profile) that can currently be fulfilled, and sends, to the core network device, first information corresponding to the selected alternative QoS profile (alternative QoS profile).

S402: The core network device determines that a QoS parameter used by the access network device is the QoS flow-based QoS parameter and/or the PDU set-based QoS parameter.

For example, the core network device may determine that the QoS parameter used by the access network device is the QoS flow-based QoS parameter. For another example, the core network device may determine that the QoS parameter used by the access network device is the PDU set-based QoS parameter. For another example, the core network device may determine that the QoS parameters used by the access network device are the QoS flow-based QoS parameter and the PDU set-based QoS parameter.

In a possible case, when the quality of service profile corresponding to the first information includes the QoS flow-based QoS parameter, the core network device may determine that the QoS parameter used by the access network device is the QoS flow-based QoS parameter. In another possible case, when the quality of service profile corresponding to the first information includes the PDU set-based QoS parameter, the core network device may determine that the QoS parameter used by the access network device is the PDU set-based QoS parameter. In still another possible case, when the quality of service profile corresponding to the first information includes the QoS flow-based QoS parameter and the PDU set-based QoS parameter, the core network device may determine, based on capability information of the access network device and the first information, or based on the first information, that the QoS parameter used by the access network device is the QoS flow-based QoS parameter, or that the QoS parameter used by the access network device is the PDU set-based QoS parameter, or that the QoS parameters used by the access network device are the QoS flow-based QoS parameter and the PDU set-based QoS parameter.

It may be understood that, because the quality of service profile corresponding to the first information is sent by the core network device to the access network device, the core network device can identify that the quality of service profile corresponding to the first information includes the QoS flow-based QoS parameter, or includes the PDU set-based QoS parameter, or includes the QoS flow-based QoS parameter and the PDU set-based QoS parameter. Explanation and description are provided in subsequent cases.

Based on the foregoing solution, the core network device may determine that the QoS parameter used by the access network device is the QoS flow-based QoS parameter, the PDU set-based QoS parameter, or the QoS flow-based QoS parameter and the PDU set-based QoS parameter, so that in a data flow transmission process, the core network device can learn of the QoS parameter used by the access network device.

The following describes, when the quality of service profile corresponding to the first information includes the QoS flow-based QoS parameter and the PDU set-based QoS parameter in S402, a manner in which the core network device determines that the QoS parameter used by the access network device is the QoS flow-based QoS parameter, or that the QoS parameter used by the access network device is the PDU set-based QoS parameter, or that the QoS parameters used by the access network device are the QoS flow-based QoS parameter and the PDU set-based QoS parameter. Case 1 to Case 3 may be included.

Case 1: The core network device determines, based on the capability information of the access network device and the first information, that the QoS parameter used by the access network device is the QoS flow-based QoS parameter, the PDU set-based QoS parameter, or the QoS flow-based QoS parameter and the PDU set-based QoS parameter.

In a possible implementation, the access network device may send, to the core network device, information indicating whether the access network device supports PDU set-based QoS handling (PDU set-based QoS handling). In a possible case, if the access network device supports the PDU set-based QoS handling, the access network device may send first indication information to the core network device, to indicate that the access network device supports the PDU set-based QoS handling. If the access network device does not support the PDU set-based QoS handling, the access network device does not send the first indication information to the core network device. In this case, the core network device may determine, based on whether the first indication information is received from the access network device, whether the access network device supports the PDU set-based QoS handling. For example, if the core network device does not receive the first indication information from the access network device, the core network device may determine that the access network device does not support the PDU set-based QoS handling. For another example, if the core network device receives the first indication information from the access network device, the core network device may determine that the access network device supports the PDU set-based QoS handling.

In another possible case, if the access network device supports the PDU set-based QoS handling, the access network device may send first indication information to the core network device, to indicate that the access network device supports the PDU set-based QoS handling. If the access network device does not support the PDU set-based QoS handling, the access network device may send second indication information to the core network device, to indicate that the access network device does not support the PDU set-based QoS handling. In other words, if the core network device receives the first indication information from the access network device, the core network device may determine that the access network device supports the PDU set-based QoS handling; or if the core network device receives the second indication information from the access network device, the core network device may determine that the access network device does not support the PDU set-based QoS handling.

In still another possible case, the access network device may indicate, by using fourth indication information, whether the access network device supports the PDU set-based QoS handling. For example, when a value of the fourth indication information is a first value, it may indicate that the access network device supports the PDU set-based QoS handling. For another example, when a value of the fourth indication information is a second value, it may indicate that the access network device does not support the PDU set-based QoS handling. It may be understood that the first value is different from the second value. For example, the fourth indication information may be 1-bit indication information. When the value of the fourth indication information is 1, it may indicate that the access network device supports the PDU set-based QoS handling; and when the value of the fourth indication information is 0, it may indicate that the access network device does not support the PDU set-based QoS handling. Alternatively, when the value of the fourth indication information is 0, it may indicate that the access network device supports the PDU set-based QoS handling; and when the value of the fourth indication information is 1, it may indicate that the access network device does not support the PDU set-based QoS handling.

Based on the foregoing solution, the core network device may determine whether the access network device supports the PDU set-based QoS handling. Therefore, the core network device can determine, based on the first information, that the QoS parameter used by the access network device is the QoS flow-based QoS parameter, the PDU set-based QoS parameter, or the QoS flow-based QoS parameter and the PDU set-based QoS parameter. For example, if the access network device supports the PDU set-based QoS handling, the core network device may determine that the QoS parameter used by the access network device includes the PDU set-based QoS parameter in the quality of service profile corresponding to the first information. For another example, if the access network device does not support the PDU set-based QoS handling, the core network device may determine that the QoS parameter used by the access network device is the QoS flow-based QoS parameter in the quality of service profile corresponding to the first information.

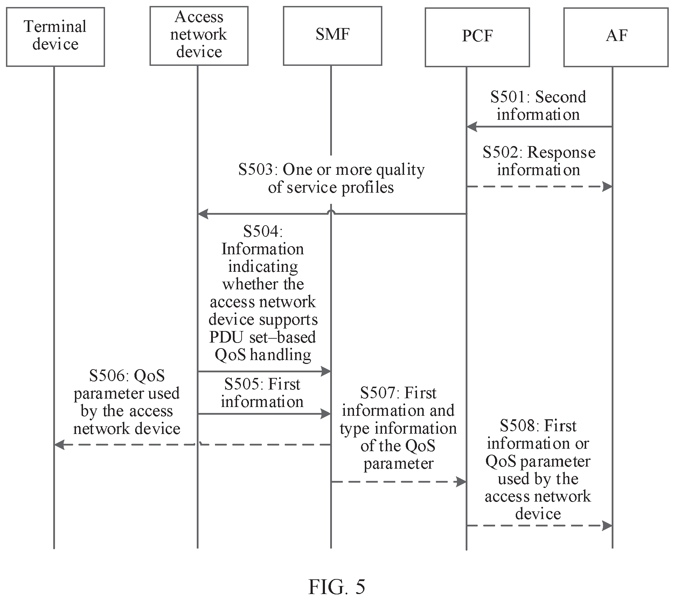

In this embodiment of this application, the core network device may include an SMF, a PCF, an AF, an NEF, and the like. The following describes the technical solution of Case 1 with reference to FIG. 5.

FIG. 5 is an example flowchart of a quality of service parameter notification method according to an embodiment of this application. The method may include the following operations.

S501: An AF sends second information to a PCF.

Correspondingly, the PCF receives the second information from the AF.

In a possible case, the AF may send the second information to an NEF, and the NEF sends the second information to the PCF. For example, the AF may send a QoS create request (Nnef_AF session with QoS create request) to the NEF. The NEF may send a policy authorization create request (Npcf_policy authorization create request) to the PCF. Optionally, the NEF may authenticate the AF, to determine whether the AF is authorized.

In a possible implementation, optionally, the second information may include a QoS flow-based quality of service requirement and/or flow characteristic information of a QoS flow. The second information includes a PDU set-based quality of service requirement. The second information may be used to generate one or more quality of service profiles.

Optionally, the embodiment shown in FIG. 5 may further include the following operation S502.

S502: The PCF sends response information to the AF.

Correspondingly, the AF receives the response information from the PCF.

The response information may indicate that the PCF has generated one or more quality of service profiles, or may indicate that the PCF has received the second information. This is not specifically limited in this application. In a possible case, the PCF may send the response information to the NEF, and the NEF sends the response information to the AF. For example, the PCF may send a policy authorization create response (Npcf_policy authorization create response) to the NEF, and the NEF may send a QoS create response (Nnef_AF session with QoS create response) to the AF.

S503: The PCF sends one or more quality of service profiles to an access network device.

Correspondingly, the access network device receives the one or more quality of service profiles from the PCF.

In a possible case, the PCF may generate a PCC rule based on the second information. The PCC rule may include one or more quality of service profiles, and each quality of service profile may include one or more PDU set-based QoS parameters and/or one or more QoS flow-based QoS parameters. The PCF may send the PCC rule to an SMF. The SMF may determine one or more quality of service profiles according to the PCC rule. In the one or more quality of service profiles, a quality of service profile may include one or more QoS parameters. The one or more QoS parameters may include a PDU set-based QoS parameter and/or a QoS flow-based QoS parameter. For example, the one or more quality of service profiles may include a first quality of service profile, and the first quality of service profile may include one or more QoS flow-based QoS parameters, or the first quality of service profile may include one or more PDU set-based QoS parameters, or the first quality of service profile may include one or more QoS flow-based QoS parameters and one or more PDU set-based QoS parameters. The SMF may send, to the access network device, the one or more quality of service profiles and first information, for example, a reference, corresponding to each quality of service profile.

S504: The access network device sends, to the SMF, information indicating whether the access network device supports PDU set-based QoS handling.

Correspondingly, the SMF receives, from the access network device, the information indicating whether the access network device supports the PDU set-based QoS handling.

S504 may be implemented with reference to the first indication information, the second indication information, or the fourth indication information described above. This is not specifically limited in this application.

It may be understood that execution timing of S504 is not limited in embodiments of this application. For example, S504 may be performed before S501, S502, or S503, may be performed after S501, S502, or S503, or may be performed in between the execution of S501, S502, or S503. This is not specifically limited in this application.

For example, when the quality of service profile received by the access network device includes the PDU set-based QoS parameter, if the access network device supports the PDU set-based QoS handling, the access network device may send, to the SMF, information about that the access network device supports the PDU set-based QoS handling. In this way, the SMF can trigger, based on the information sent by the access network device, a UPF to perform PDU set identification and to add PDU set information. If the access network device does not support the PDU set-based QoS handling, the access network device does not send any information, or the access network device sends second indication information or fourth indication information with a second value. In this way, the SMF does not enable the UPF to start the PDU set identification and addition of the PDU set information.

S505: The access network device sends the first information to the SMF.

Correspondingly, the SMF receives the first information from the access network device.

In S505, the SMF may determine, based on the first information received from the access network device, a quality of service profile used by the access network device. For example, the access network device may select one quality of service profile from one or more quality of service profiles, and send, to the SMF, first information corresponding to the quality of service profile selected by the access network device.

Optionally, when the access network device does not fulfill a QoS parameter included in a QoS profile (QoS profile), the access network device selects an alternative QoS profile (alternative QoS profile) that can currently be fulfilled, and sends, to the core network device, first information corresponding to the selected alternative QoS profile (alternative QoS profile).

In a possible case, if the quality of service profile selected by the access network device includes a QoS flow-based QoS parameter and a PDU set-based QoS parameter, the access network device may choose to use the QoS flow-based QoS parameter, or choose to use the PDU set-based QoS parameter, or choose to use the QoS flow-based QoS parameter and the PDU set-based QoS parameter (for example, QoS flow-based QoS parameters are used for some parameters, such as a packet delay budget (packet delay budget, PDB), and PDU set-based QoS parameters are used for some other parameters, such as a PDU set error rate (PDU set error rate)). For example, if the access network device supports the PDU set-based QoS handling, the access network device may choose to use the PDU set-based QoS parameter, or choose to use the QoS flow-based QoS parameter and the PDU set-based QoS parameter. For another example, if the access network device does not support the PDU set-based QoS handling, the access network device may choose to use the QoS flow-based QoS parameter.

In a possible implementation, the SMF may determine, based on S505, the quality of service profile used by the access network device, and may determine, based on S504, that the QoS parameter in the quality of service profile used by the access network device is the QoS flow-based QoS parameter, or that the QoS parameter used by the access network device is the PDU set-based QoS parameter, or that the QoS parameters used by the access network device are the QoS flow-based QoS parameter and the PDU set-based QoS parameter.

For example, in S504, the access network device sends, to the SMF, information about that the access network device supports the PDU set-based QoS handling. In this case, the SMF may determine, based on S504 and S505, that the quality of service parameter used by the access network device includes the PDU set-based QoS parameter in the quality of service profile corresponding to the first information. Specifically, the quality of service parameter used by the access network device may be the PDU set-based QoS parameter, or may be the PDU set-based QoS parameter and the QoS flow-based QoS parameter. For another example, in S504, the access network device sends, to the SMF, information about that the access network device does not support the PDU set-based QoS handling. In this case, the SMF may determine, based on S504 and S505, that the quality of service parameter used by the access network device is the QoS flow-based QoS parameter in the quality of service profile corresponding to the first information.

Optionally, the embodiment shown in FIG. 5 may further include the following operation S506.

S506: The SMF sends, to a terminal device, the QoS parameter used by the access network device.

Correspondingly, the terminal device receives, from the SMF, the QoS parameter used by the access network device.

For example, in S505, if the access network device sends, to the SMF, the information about that the access network device supports the PDU set-based QoS handling, the SMF may determine, based on the QoS parameter included in the quality of service profile corresponding to the first information in S504, that the QoS parameter used by the access network device is the PDU set-based QoS parameter, or that the QoS parameters used by the access network device are the QoS flow-based QoS parameter and the PDU set-based QoS parameter, and send, to the terminal device, the PDU set-based QoS parameter used by the access network device, or the QoS flow-based QoS parameter and the PDU set-based QoS parameter used by the access network device. For another example, in S505, if the access network device sends, to the SMF, the information about that the access network device does not support the PDU set-based QoS handling, the SMF may determine, based on the QoS parameter included in the quality of service profile corresponding to the first information in S504, that the QoS parameter used by the access network device is the QoS flow-based QoS parameter, and send, to the terminal device, the QoS flow-based QoS parameter used by the access network device.

In a possible manner, if the SMF receives the information about that the access network device supports the PDU set-based QoS handling, the SMF may determine, based on the QoS parameter included in the quality of service profile corresponding to the first information in S504, the QoS parameter used by the access network device. For example, if the QoS parameters included in the quality of service profile corresponding to the first information are the QoS flow-based QoS parameter and the PDU set-based QoS parameter, the access network device replaces the QoS flow-based QoS parameter (if there is a corresponding QoS flow-based QoS parameter) in the corresponding quality of service profile with the corresponding PDU set-based QoS parameter, for service flow scheduling. For another example, if the QoS parameters included in the quality of service profile corresponding to the first information are the QoS flow-based QoS parameter and the PDU set-based QoS parameter, the access network device may perform PDU set handling by using the PDU set-based QoS parameter. For example, if the corresponding quality of service profile includes a packet delay budget (PDB) and a PDU set delay budget (PSDB), the access network device replaces the packet delay budget with the PDU set delay budget, or the access network device performs PDU set handling by using the PDU set delay budget. If the corresponding quality of service profile includes a PDU set error rate (PSER) and no packet error rate (packet error rate, PER), or if the corresponding quality of service profile includes the packet error rate and no PDU set error rate, the access network device uses the included parameter as the quality of service parameter. In this case, the SMF may determine that the QoS parameters that are included in the quality of service profile corresponding to the first information in S504 and that are used by the access network device are the QoS flow-based QoS parameter and the PDU set-based QoS parameter. For example, the access network device uses the PDU set delay budget (PSDB) and the packet error rate (packet error rate, PER). Then, the SMF sends, to the terminal device, the specific QoS parameter used by the access network device.

Based on S506, the terminal device may determine the QoS parameter used by the access network device.

Optionally, the embodiment shown in FIG. 5 may further include the following operation S507.

S507: The SMF sends the first information and type information of the QoS parameter to the PCF.

Correspondingly, the PCF receives the first information and the type information of the QoS parameter from the SMF.

For example, the SMF may send the first information to the PCF to indicate the quality of service profile used by the access network device, and indicate, by using the type information of the QoS parameter, that the QoS parameter used by the access network device is the PDU set-based QoS parameter, the QoS flow-based QoS parameter, or the QoS flow-based QoS parameter and the PDU set-based QoS parameter.

In a possible case, after determining a type of the QoS parameter used by the access network device, the SMF may perform S507.

Based on S507, the PCF can determine that the QoS parameter used by the access network device is the QoS flow-based QoS parameter, the PDU set-based QoS parameter, or the QoS flow-based QoS parameter and the PDU set-based QoS parameter.

Optionally, the embodiment shown in FIG. 5 may further include the following operation S508.

S508: The PCF sends, to the AF, the first information or the QoS parameter used by the access network device.

Correspondingly, the AF receives, from the PCF, the first information or the QoS parameter used by the access network device.

For example, the PCF may indicate, based on the first information, the quality of service profile used by the access network device. For another example, the PCF may indicate, to the AF, the QoS parameter used by the access network device. It may be understood that, in this case, the AF cannot determine whether the QoS parameter used by the access network device is the PDU set-based QoS parameter or the QoS flow-based QoS parameter. Optionally, the PCF may send the type information of the QoS parameter to the AF. In this way, the AF can determine, based on the type information of the QoS parameter, that the QoS parameter used by the access network device is the PDU set-based QoS parameter, or that the QoS parameter used by the access network device is the QoS flow-based QoS parameter, or that the QoS parameters used by the access network device are the QoS flow-based QoS parameter and the PDU set-based QoS parameter.

Based on S508, the AF may determine the QoS parameter used by the access network device, to learn of a QoS parameter used by the access network device in a data flow transmission process.

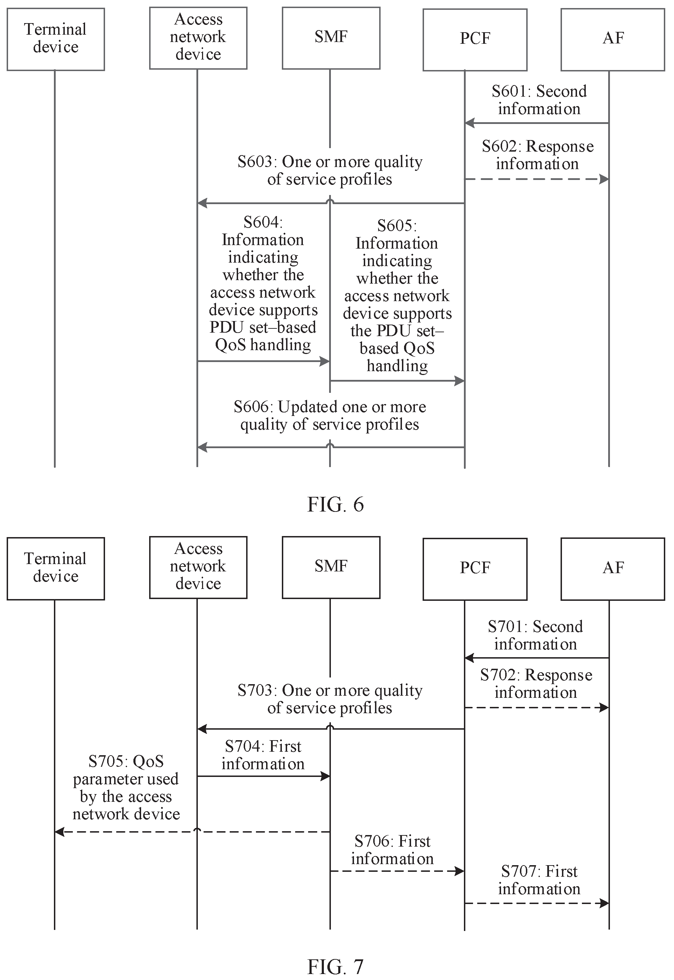

In the embodiment shown in FIG. 5, in the one or more quality of service profiles sent by the PCF to the access network device, a quality of service profile may include a QoS flow-based QoS parameter and/or a PDU set-based QoS parameter. In a possible implementation, the PCF may update the one or more quality of service profiles based on the information that indicates whether the PDU set-based QoS handling is supported and that is sent by the access network device. Updated one or more quality of service profiles may include a PDU set-based QoS parameter and/or a QoS flow-based QoS parameter. The following descriptions are provided with reference to FIG. 6.

FIG. 6 is an example flowchart of a quality of service parameter notification method according to an embodiment of this application. The method may include the following operations.

For S601 to S603, refer to S501 to S503.

S604: The access network device sends, to the SMF, information indicating whether the access network device supports PDU set-based QoS handling.

Correspondingly, the SMF receives, from the access network device, the information indicating whether the access network device supports the PDU set-based QoS handling.

For S604, refer to S504.

S605: The SMF sends, to the PCF, the information indicating whether the access network device supports the PDU set-based QoS handling.

Correspondingly, the PCF receives, from the SMF, the information indicating whether the access network device supports the PDU set-based QoS handling.

For example, in S604, if the access network device sends, to the SMF, information about that the access network device supports the PDU set-based QoS handling, in S605, the SMF may send, to the PCF, the information about that the access network device supports the PDU set-based QoS handling. For another example, in S604, if the access network device sends, to the SMF, information about that the access network device does not support the PDU set-based QoS handling, in S605, the SMF sends, to the PCF, the information about that the access network device does not support the PDU set-based QoS handling.

It may be understood that the information indicating whether the access network device supports the PDU set-based QoS handling may be implemented with reference to the first indication information, the second indication information, or the fourth indication information described above. Details are not described herein again.

S606: The PCF sends updated one or more quality of service profiles to the access network device.

Correspondingly, the access network device receives the updated one or more quality of service profiles from the PCF.

For example, the PCF may generate a PCC rule based on the second information received from the AF. The PCC rule may include one or more quality of service profiles, and each quality of service profile may include one or more PDU set-based QoS parameters and/or one or more QoS flow-based QoS parameters. For example, in S605, if the access network device supports the PDU set-based QoS handling, the PCC rule may include the one or more PDU set-based QoS parameters. For another example, in S605, if the access network device does not support the PDU set-based QoS handling, the PCC rule may include the one or more QoS flow-based QoS parameters.

The SMF may determine one or more quality of service profiles according to the PCC rule. In the one or more quality of service profiles, a quality of service profile may include one or more QoS parameters. The one or more QoS parameters may include a PDU set-based QoS parameter, a QoS flow-based QoS parameter, or a PDU set-based QoS parameter and a QoS flow-based QoS parameter. For example, in S605, if the access network device supports the PDU set-based QoS handling, the one or more QoS parameters may include one or more PDU set-based QoS parameters. For another example, in S605, if the access network device does not support the PDU set-based QoS handling, the one or more QoS parameters may include one or more QoS flow-based QoS parameters. The SMF may send, to the access network device, the one or more quality of service profiles and first information, for example, a reference, corresponding to each quality of service profile.

Based on the foregoing solution, the PCF may update one or more quality of service profiles based on indication of the SMF, and the SMF does not need to determine that the QoS parameter used by the access network device is the PDU set-based QoS parameter, the QoS flow-based QoS parameter, or the PDU set-based QoS parameter and the QoS flow-based QoS parameter. The access network device may select one quality of service profile from the updated one or more quality of service profiles, and send, to the SMF, first information corresponding to the selected quality of service profile. In this way, the SMF can determine, based on the first information, a quality of service profile used by the access network device, to notify the terminal device that the QoS parameter used by the access network device is a QoS parameter included in the quality of service profile corresponding to the first information. The SMF may also send the first information to the PCF, to notify the PCF of the quality of service profile used by the access network device.

In a possible implementation, if the access network device is switched, for example, switched from a first access network device to a second access network device, the SMF may or may not send a notification, for example, a QoS profile notification (notification), to the terminal device. This is not specifically limited in this application. The notification may indicate, to the terminal device, a QoS parameter used by the second access network device. However, in this case, the SMF cannot learn of whether the second access network device supports the PDU set-based QoS handling. The SMF may determine, based on a PDU set in a previous data flow, that PDU set-base QoS handling needs to be performed. Therefore, the SMF may send a PDU set-based QoS handling capability (PDU set capability) confirmation to the second access network device. For example, the SMF may send third information to the second access network device, where the third information is used to confirm whether the second access network device supports the PDU set-based QoS handling. The second access network device may send fourth information to the SMF, where the fourth information indicates whether the second access network device supports the PDU set-based QoS handling. The fourth information may be implemented with reference to the first indication information, the second indication information, or the fourth indication information described above. Details are not described herein again.

Similarly, the SMF performs S605, so that the PCF performs S606, to update the one or more quality of service profiles.

Case 2: The core network device determines, based on the first information, that the QoS parameter used by the access network device is the QoS flow-based QoS parameter, or that the QoS parameter used by the access network device is the PDU set-based QoS parameter, or that the QoS parameters used by the access network device are the PDU set-based QoS parameter and the QoS flow-based QoS parameter.

In a possible implementation, first information in a related technology may indicate an alternative quality of service profile (alternative QoS profile). In this embodiment of this application, the first information may be enhanced, so that the first information can indicate both the quality of service profile and a type of a QoS parameter included in the quality of service profile. For example, the first information in Case 2 may indicate a quality of service profile 1, and the quality of service profile 1 may include a QoS flow-based QoS parameter and a PDU set-based QoS parameter. The first information in Case 2 may also indicate the QoS flow-based QoS parameter, the PDU set-based QoS parameter, or the PDU set-based QoS parameter and the QoS flow-based QoS parameter.

For example, it is assumed that one bit is added to the second information, and the bit may indicate the type of the QoS parameter. For example, when a value of the added bit is 0, the added bit may indicate the QoS flow-based QoS parameter, and when the value of the added bit is 1, the added bit may indicate the PDU set-based QoS parameter, or indicate the PDU set-based QoS parameter and the QoS flow-based QoS parameter. Alternatively, when the value of the added bit is 1, the added bit may indicate the QoS flow-based QoS parameter, and when the value of the added bit is 0, the added bit may indicate the PDU set-based QoS parameter, or indicate the PDU set-based QoS parameter and the QoS flow-based QoS parameter. Specifically, assuming that a value of the second information is 11, the 1^{st} 1 may indicate the quality of service profile 1, and the 2^{nd} 1 may indicate the QoS flow-based QoS parameter in the quality of service profile 1.

Based on Case 2, the core network device may determine that the QoS parameter used by the access network device is the QoS flow-based QoS parameter, or that the QoS parameter used by the access network device is the PDU set-based QoS parameter, or that the QoS parameters used by the access network device are the PDU set-based QoS parameter and the QoS flow-based QoS parameter, so that in a data flow transmission process, the core network device can perform corresponding handling based on the QoS parameter used by the access network device.

In this embodiment of this application, the core network device may include an SMF, a PCF, an AF, an NEF, and the like. The following describes the technical solution of Case 2 with reference to FIG. 7.

FIG. 7 is an example flowchart of a quality of service parameter notification method according to an embodiment of this application. The method may include the following operations.

For S701 and S702, refer to S501 and S502.

S703: The PCF sends one or more quality of service profiles to an access network device.

Correspondingly, the access network device receives the one or more quality of service profiles from the PCF.

In a possible case, the PCF may generate a PCC rule based on the second information. The PCC rule may include one or more quality of service profiles, and each quality of service profile may include one or more PDU set-based QoS parameters and/or one or more QoS flow-based QoS parameters. The PCF may send the PCC rule to an SMF. The SMF may determine one or more quality of service profiles according to the PCC rule. In the one or more quality of service profiles, a quality of service profile may include one or more QoS parameters. The one or more QoS parameters may include a PDU set-based QoS parameter and/or a QoS flow-based QoS parameter. For example, the one or more quality of service profiles may include a first quality of service profile, and the first quality of service profile may include one or more QoS flow-based QoS parameters, or the first quality of service profile may include one or more PDU set-based QoS parameters, or the first quality of service profile may include one or more QoS flow-based QoS parameters and one or more PDU set-based QoS parameters.

The SMF may send, to the access network device, the one or more quality of service profiles and first information, for example, a reference, corresponding to each quality of service profile. In a possible case, if the quality of service profile includes the QoS flow-based QoS parameter and the PDU set-based QoS parameter, the quality of service profile may correspond to three pieces of first information. One piece of first information may correspond to the QoS flow-based QoS parameter in the quality of service profile, one piece of first information may correspond to the PDU set-based QoS parameter in the quality of service profile, and the other piece of first information may correspond to the PDU set-based QoS parameter and the QoS flow-based QoS parameter in the quality of service profile.

S704: The access network device sends the first information to the SMF.

Correspondingly, the SMF receives the first information from the access network device.

Optionally, when the access network device does not fulfill a QoS parameter included in a QoS profile (QoS profile), the access network device selects an alternative QoS profile (alternative QoS profile) that can currently be fulfilled, and sends, to the core network device, first information corresponding to the selected alternative QoS profile (alternative QoS profile).

In S704, the SMF may determine, based on the first information received from the access network device, a type of a QoS parameter in a quality of service profile used by the access network device.

For example, the access network device may select one quality of service profile from the one or more quality of service profiles. In a possible case, if the quality of service profile selected by the access network device includes a QoS flow-based QoS parameter and a PDU set-based QoS parameter, the access network device may choose to use the QoS flow-based QoS parameter or the PDU set-based QoS parameter. For example, if the access network device supports PDU set-based QoS handling, the access network device may choose to use the PDU set-based QoS parameter. For another example, if the access network device does not support the PDU set-based QoS handling, the access network device may choose to use the QoS flow-based QoS parameter. The access network device may send corresponding first information to the SMF based on a type of the selected QoS parameter.

Optionally, the embodiment shown in FIG. 7 may further include the following operation S705.

S705: The SMF sends, to a terminal device, the QoS parameter used by the access network device.

Correspondingly, the terminal device receives, from the SMF, the QoS parameter used by the access network device.

For example, the SMF may determine, based on the first information in S704, the type of the QoS parameter in the quality of service profile used by the access network device. For example, in S704, if the first information indicates a QoS flow-based QoS parameter in a corresponding quality of service profile, in S705, the SMF may send, to the terminal device, the QoS flow-based QoS parameter used by the access network device. In S704, if the first information indicates a PDU set-based QoS parameter in a corresponding quality of service profile, in S705, the SMF may send, to the terminal device, the PDU set-based QoS parameter used by the access network device, or the PDU set-based QoS parameter and the QoS flow-based QoS parameter used by the access network device.

Optionally, the embodiment shown in FIG. 7 may further include the following operation S706.

S706: The SMF sends the first information to the PCF.

Correspondingly, the PCF receives the first information from the SMF.

For example, the SMF may send the first information to the PCF, to indicate the type of the QoS parameter in the quality of service profile used by the access network device. For example, the SMF may send the first information to the PCF, to indicate that the QoS parameter used by the access network device is a QoS flow-based QoS parameter in a quality of service profile corresponding to the first information. For another example, the SMF may send the first information to the PCF, to indicate that the QoS parameter used by the access network device is a PDU set-based QoS parameter in the quality of service profile corresponding to the first information, or indicate that the QoS parameters used by the access network device are the PDU set-based QoS parameter and the QoS flow-based QoS parameter in the quality of service profile corresponding to the first information.

Optionally, the embodiment shown in FIG. 7 may further include the following operation S707.

S707: The PCF sends the first information to the AF.

Correspondingly, the AF receives the first information from the PCF.

For example, the PCF may send the first information to the AF, to indicate the type of the QoS parameter in the quality of service profile used by the access network device. For example, the PCF may send the first information to the AF, to indicate that the QoS parameter used by the access network device is a QoS flow-based QoS parameter in a quality of service profile corresponding to the first information. For another example, the PCF may send the first information to the AF, to indicate that the QoS parameter used by the access network device is the PDU set-based QoS parameter, or the PDU set-based QoS parameter and the QoS flow-based QoS parameter in the quality of service profile corresponding to the first information.

Case 3: The core network device determines, based on the first information sent by the access network device and type information of the QoS parameter, that the QoS parameter used by the access network device is the QoS flow-based QoS parameter or the PDU set-based QoS parameter.

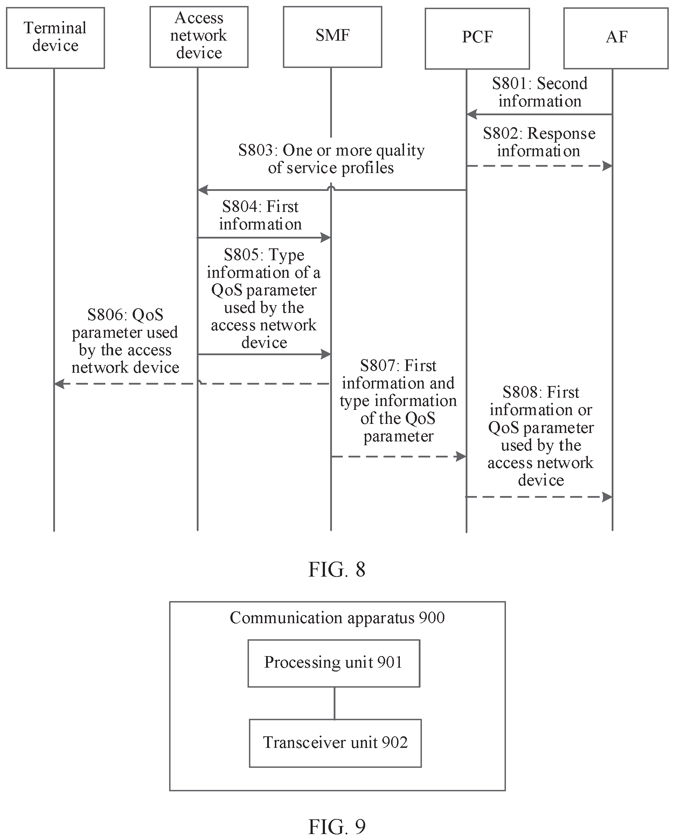

In Case 3, the access network device may send the first information to the core network device, to indicate a quality of service profile or the quality of service parameter that is used by the access network device. The access network device may send, to the core network device, the type information of the QoS parameter used by the access network device, to indicate that the QoS parameter used by the access network device is the QoS flow-based QoS parameter, the PDU set-based QoS parameter, or the PDU set-based QoS parameter and the QoS flow-based QoS parameter. In this embodiment of this application, the core network device may include an SMF, a PCF, an AF, an NEF, and the like. The following describes the technical solution of Case 3 with reference to FIG. 8.

FIG. 8 is an example flowchart of a quality of service parameter notification method according to an embodiment of this application. The method may include the following operations.

For S801 to S803, refer to S501 to S503.

For S804, refer to S505.

S805: The access network device sends, to the SMF, type information of a QoS parameter used by the access network device.

Correspondingly, the SMF receives, from the access network device, the type information of the QoS parameter used by the access network device.

For example, if the access network device uses a PDU set-based QoS parameter in a quality of service profile corresponding to the first information, the access network device may send, to the SMF, that the type information of the QoS parameter used by the access network device is a PDU set-based QoS parameter, or the type information of the QoS parameter used by the access network device is a PDU set-based QoS parameter and a QoS flow-based QoS parameter. For another example, if the access network device uses a QoS flow-based QoS parameter in the quality of service profile corresponding to the first information, the access network device may send, to the SMF, that the type information of the QoS parameter used by the access network device is a QoS flow-based QoS parameter.

Optionally, if the access network device supports the PDU set-based QoS handling, the access network device may use the PDU set-based QoS parameter in the quality of service profile corresponding to the first information. If the access network device does not support the PDU set-based QoS handling, the access network device may use the QoS flow-based QoS parameter in the quality of service profile corresponding to the first information.

It may be understood that the type information of the QoS parameter and the first information may be sent in one message, or may be sent in different messages. This is not specifically limited in this application.

Optionally, the embodiment shown in FIG. 8 may further include the following operation S806.

S806: The SMF sends, to a terminal device, the QoS parameter used by the access network device.

Correspondingly, the terminal device receives, from the SMF, the QoS parameter used by the access network device.

For example, if the type information of the QoS parameter sent by the access network device to the SMF in S805 is the PDU set-based QoS parameter, in S806, the SMF sends, to the terminal device, the PDU set-based QoS parameter, or the PDU set-based QoS parameter and the QoS flow-based QoS parameter in the quality of service profile corresponding to the first information. For another example, if the type information of the QoS parameter sent by the access network device to the SMF in S805 is the QoS flow-based QoS parameter, in S806, the SMF sends, to the terminal device, the QoS flow-based QoS parameter in the quality of service profile corresponding to the first information.

For S807 and S808, refer to S507 and S508.

Based on the technical solution shown in FIG. 8, the access network device may indicate, to the core network device, the type of the QoS parameter used by the access network device, to provide another technical solution in which the core network device can determine, based on indication of the access network device, the type of the QoS parameter used by the access network device.

Based on the concept of the foregoing embodiments, referring to FIG. 9, an embodiment of this application provides a communication apparatus 900. The apparatus 900 includes a processing unit 901 and a transceiver unit 902. The apparatus 900 may be a communication apparatus, or may be an apparatus that is used in a communication apparatus and that supports the communication apparatus in performing a quality of service parameter notification method.

The transceiver unit may also be referred to as a transceiver module, a transceiver, a transceiver machine, a transceiver apparatus, or the like. The processing unit may also be referred to as a processor, a processing board, a processing unit, a processing apparatus, or the like. Optionally, a component that is in the transceiver unit and that is configured to implement a receiving function may be considered as a receiving unit. It should be understood that the transceiver unit is configured to perform a sending operation and a receiving operation of the communication apparatus in the foregoing method embodiments, and a component that is in the transceiver unit and that is configured to implement a sending function is considered as a sending unit. That is, the transceiver unit includes the receiving unit and the sending unit.

In addition, it should be noted that, if the apparatus is implemented by using a chip or a chip circuit, the transceiver unit may be an input/output circuit and/or a communication interface, and perform an input operation (corresponding to the foregoing receiving operation) and an output operation (corresponding to the foregoing sending operation). The processing unit is an integrated processor, a microprocessor, or an integrated circuit.

The following describes in detail implementations in which the apparatus 900 is used in a first communication apparatus and a second communication apparatus.

For example, when the apparatus 900 is used in the first communication apparatus, operations performed by units of the apparatus 900 are described in detail.

In an optional implementation, the communication apparatus 900 may be used in the first communication apparatus, to perform the method performed by the first communication apparatus, specifically, for example, the method performed by the terminal device in the embodiments shown in FIG. 4 to FIG. 8. It may be understood that the communication apparatus 000 may also be used in network elements in the first communication apparatus, for example, an SMF, a PCF, an NEF, and an AF.

For example, the transceiver unit 902 is configured to receive first information from a second communication apparatus, where a quality of service profile (QoS profile) corresponding to the first information includes a quality of service (quality of service, QoS) flow-based quality of service parameter and a protocol data unit set-based quality of service parameter. The processing unit 901 is configured to determine a quality of service parameter used by the second communication apparatus, where the used quality of service parameter is the QoS flow-based quality of service parameter or the protocol data unit set-based quality of service parameter.

For example, when the apparatus 900 is used in the second communication apparatus, operations performed by units of the apparatus 900 are described in detail.

In an optional implementation, the communication apparatus 900 may be used in the second communication apparatus, to perform the method performed by the second communication apparatus, specifically, for example, the method performed by the second communication apparatus in the embodiments shown in FIG. 4 to FIG. 8. It may be understood that the communication apparatus 900 may also be used in network elements in the second communication apparatus, for example, an SMF, a PCF, an NEF, and an AF.

For example, the transceiver unit 902 is configured to receive one or more quality of service profiles from a first communication apparatus. One quality of service profile corresponds to one piece of first information and includes one or more quality of service parameters, and the one or more quality of service parameters include a quality of service QoS flow-based quality of service parameter and a protocol data unit set-based quality of service parameter. The processing unit 901 is configured to determine the first information. The transceiver unit 902 is further configured to send the first information to the first communication apparatus.

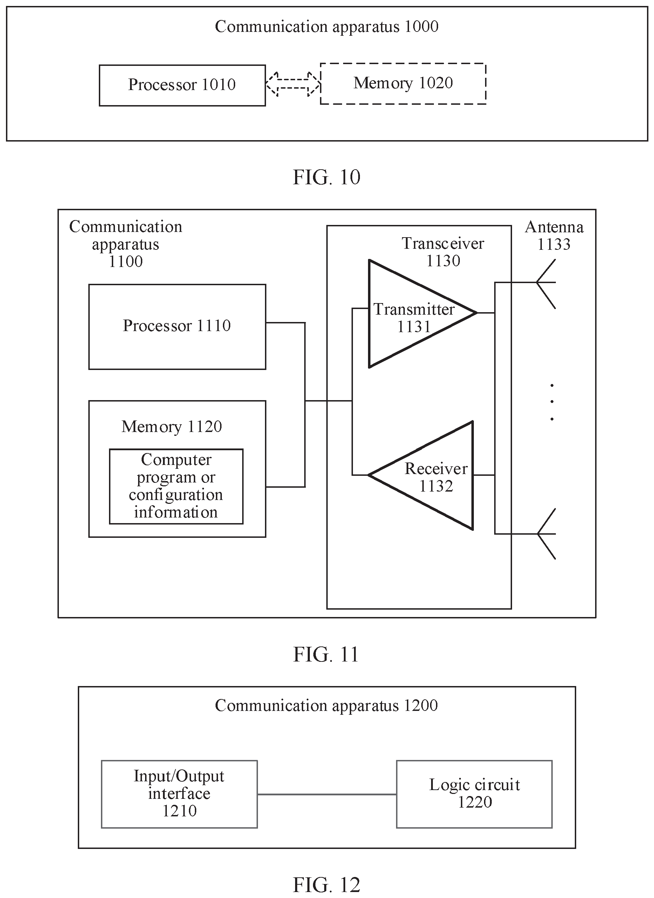

Based on the concept of embodiments, as shown in FIG. 10, an embodiment of this application provides a communication apparatus 1000. The communication apparatus 1000 includes a processor 1010. Optionally, the communication apparatus 1000 may further include a memory 1020, configured to: store instructions executed by the processor 1010, store input data for the processor 1010 to run instructions, or store data generated after the processor 1010 runs instructions. The processor 1010 may implement the methods shown in the foregoing method embodiments based on the instructions stored in the memory 1020.

Based on the concept of embodiments, as shown in FIG. 11, an embodiment of this application provides a communication apparatus 1100. The communication apparatus 1100 may be a chip or a chip system. Optionally, in this embodiment of this application, the chip system may include a chip, or may include a chip and another discrete device.

The communication apparatus 1100 may include at least one processor 1110. The processor 1110 is coupled to a memory. Optionally, the memory may be located inside the apparatus, or may be located outside the apparatus. For example, the communication apparatus 1100 may further include at least one memory 1120. The memory 1120 stores a computer program, configuration information, a computer program or instructions, and/or data necessary for implementing any one of the foregoing embodiments. The processor 1110 may execute the computer program stored in the memory 1120, to complete the method in any one of the foregoing embodiments. Optionally, the memory may be integrated with the processor.

The coupling in this embodiment of this application may be an indirect coupling or a communication connection between apparatuses, units, or modules in an electrical form, a mechanical form, or another form, and is used for information exchange between the apparatuses, the units, or the modules. The processor 1110 and the memory 1120 may operate cooperatively. A specific connection medium between a transceiver 1130, the processor 1110, and the memory 1120 is not limited in embodiments of this application.

The communication apparatus 1100 may further include the transceiver 1130, and the communication apparatus 1100 may exchange information with another device through the transceiver 1130. The transceiver 1130 may be a circuit, a bus, a transceiver, or any other apparatus that can be configured to exchange information, or is referred to as a signal transceiver unit. As shown in FIG. 11, the transceiver 1130 includes a transmitter 1131, a receiver 1132, and an antenna 1133. In addition, when the communication apparatus 1100 is a chip-type apparatus or a circuit, the transceiver in the communication apparatus 1100 may alternatively be an input/output circuit and/or a communication interface, and may input data (or referred to as receive data) and output data (or referred to as send data). The processor is an integrated processor, a microprocessor, or an integrated circuit, and the processor may determine output data based on input data.

In a possible implementation, the communication apparatus 1100 may be used in a communication apparatus. Specifically, the communication apparatus 1100 may be a communication apparatus, or may be an apparatus that supports a communication apparatus in implementing functions of the first communication apparatus or the second communication apparatus in any one of the foregoing embodiments. The memory 1120 stores a computer program, a computer program or instructions, and/or data necessary for implementing functions of the first communication apparatus or the second communication apparatus in any one of the foregoing embodiments. The processor 1110 may execute the computer program stored in the memory 1120, to complete the method performed by the first communication apparatus or the second communication apparatus in any one of the foregoing embodiments.

In embodiments of this application, the processor may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store a computer program, a computer program or instructions, and/or data.

Based on the foregoing embodiments, refer to FIG. 12. An embodiment of this application further provides another communication apparatus 1200, including an input/output interface 1210 and a logic circuit 1220. The input/output interface 1210 is configured to receive code instructions and transmit the code instructions to the logic circuit 1220. The logic circuit 1220 is configured to run the code instructions to perform the method performed by the first communication apparatus or the second communication apparatus in any one of the foregoing embodiments.

The following describes in detail operations performed when the apparatus 1200 is used in the first communication apparatus or the second communication apparatus.

In an optional implementation, the communication apparatus 1200 may be used in the first communication apparatus, to perform the method performed by the first communication apparatus, specifically, for example, the method performed by the first communication apparatus in the embodiments shown in FIG. 4 to FIG. 8. It may be understood that the communication apparatus 1200 may also be used in network elements in the first communication apparatus, for example, an AMF, an SMF, and a UPF.

For example, the input/output interface 1210 is configured to input first information from a second communication apparatus, where a quality of service profile (QoS profile) corresponding to the first information includes a quality of service (quality of service, QoS) flow-based quality of service parameter and a protocol data unit set-based quality of service parameter. The logic circuit 1220 is configured to determine a quality of service parameter used by the second communication apparatus, where the used quality of service parameter is the QoS flow-based quality of service parameter or the protocol data unit set-based quality of service parameter.

The communication apparatus 1200 provided in this embodiment may be used in the first communication apparatus to implement the method performed by the first communication apparatus. Therefore, for technical effects that can be achieved, refer to the foregoing method embodiments. Details are not described herein again.

In an optional implementation, the communication apparatus 1200 may be used in the second communication apparatus, to perform the method performed by the second communication apparatus, specifically, for example, the method performed by the second communication apparatus in the embodiments shown in FIG. 4 to FIG. 8. It may be understood that the communication apparatus 1200 may also be used in network elements in the second communication apparatus, for example, an AMF, an SMF, and a UPF.

For example, the input/output interface 1210 is configured to input one or more quality of service profiles from a first communication apparatus. One quality of service profile corresponds to one piece of first information and includes one or more quality of service parameters, and the one or more quality of service parameters include a quality of service QoS flow-based quality of service parameter and a protocol data unit set-based quality of service parameter. The logic circuit 1220 is configured to determine the first information. The input/output interface 1210 is further configured to output the first information.

The communication apparatus 1200 provided in this embodiment may be used in the second communication apparatus to implement the method performed by the second communication apparatus. Therefore, for technical effects that can be achieved, refer to the foregoing method embodiments. Details are not described herein again.

Based on the foregoing embodiments, an embodiment of this application further provides a communication system. The system includes at least one first core network and at least one second core network. Optionally, the communication system further includes at least one terminal device. For technical effects that can be achieved, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the communication apparatus in any one of the foregoing embodiments is implemented. The computer-readable storage medium may include any medium that can store program code, for example, a USB flash drive, a portable hard drive, a read-only memory, a random access memory, a magnetic disk, or an optical disc.

To implement functions of the communication apparatuses in FIG. 9 to FIG. 12, an embodiment of this application further provides a chip, including a processor, configured to support the communication apparatus in implementing the function of the first communication apparatus or the second communication apparatus in the foregoing method embodiments. In a possible design, the chip is connected to a memory, or the chip includes a memory. The memory is configured to store a computer program or instructions and data that are necessary for a terminal device or a network device.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each step and/or each block in the flowcharts and/or the block diagrams and a combination of steps and/or blocks in the flowcharts and/or the block diagrams. The computer program or the instructions may be provided for a general-purpose computer, a dedicated computer, an embedded processor, or a processor of any other programmable data processing device to generate a machine, so that an apparatus configured to implement a specific function in one or more steps in the flowcharts and/or in one or more blocks in the block diagrams is generated by using instructions executed by a computer or the processor of any other programmable data processing device.

The computer program or the instructions may be stored in a computer-readable memory that can instruct the computer or any other programmable data processing device to work in a specific manner, so that an artifact including an instruction apparatus is generated by using the instructions stored in the computer-readable memory. The instruction apparatus implements a specific function in one or more steps in the flowcharts and/or in one or more blocks in the block diagrams.

The computer program or the instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more steps in the flowcharts and/or in one or more blocks in the block diagrams.

It is clear that a person skilled in the art may make various modifications and variations to embodiments of this application without departing from the scope of embodiments of this application. This application is intended to cover these modifications and variations of this application provided that such modifications and variations fall within the scope of protection defined by the following claims and equivalent technologies thereof.

## Claims

1. A quality of service parameter notification method, applied to a first communication apparatus, comprising:
receiving first information from a second communication apparatus, wherein a quality of service profile (QoS profile) corresponding to the first information comprises a quality of service QoS flow-based quality of service parameter and a protocol data unit set-based quality of service parameter; and
determining a quality of service parameter used by the second communication apparatus, wherein the used quality of service parameter is the QoS flow-based quality of service parameter or the protocol data unit set-based quality of service parameter.

2. The method according to claim 1, further comprising:
receiving first indication information from the second communication apparatus, wherein the first indication information indicates that the second communication apparatus supports protocol data unit set-based quality of service handling; and
the determining the quality of service parameter used by the second communication apparatus comprises:
determining, based on the first indication information, that the quality of service parameter used by the second communication apparatus is the protocol data unit set-based quality of service parameter.

3. The method according to claim 1, wherein
no first indication information is received from the second communication apparatus, wherein the first indication information indicates that the second communication apparatus supports protocol data unit set-based quality of service handling; and
the determining the quality of service parameter used by the second communication apparatus comprises:
determining that the quality of service parameter used by the second communication apparatus is the QoS flow-based quality of service parameter; or
the method further comprises: receiving second indication information from the second communication apparatus, wherein the second indication information indicates that the second communication apparatus does not support the protocol data unit set-based quality of service handling; and
the determining the quality of service parameter used by the second communication apparatus comprises:
determining, based on the second indication information, that the quality of service parameter used by the second communication apparatus is the QoS flow-based quality of service parameter.

4. The method according to claim 1, wherein the first information indicates that the used quality of service parameter is the QoS flow-based quality of service parameter, or the first information indicates that the used quality of service parameter is the protocol data unit set-based quality of service parameter.

5. The method according to any one of claims 1 to 4, wherein the first communication apparatus comprises a session management function network element.

6. The method according to any one of claims 1 to 5, wherein the first communication apparatus comprises the session management function network element and a policy control function network element, and the receiving the first information from the second communication apparatus comprises:
receiving, by the session management function network element, the first information from the second communication apparatus; and
the method further comprises:
sending, by the session management function network element, one or more of the used quality of service parameter, a type of the used quality of service parameter, or the first information to the policy control function network element, wherein the type of the used quality of service parameter comprises a QoS flow-based quality of service parameter type or a protocol data unit set-based quality of service parameter type.

7. The method according to any one of claims 1 to 6, wherein the first communication apparatus comprises an application function network element and the policy control function network element, and the method further comprises:
sending, by the application function network element, second information to the policy control function network element, wherein the second information comprises a protocol data unit set-based quality of service requirement, or both a protocol data unit set-based quality of service requirement and a QoS flow-based quality of service requirement, the second information is used to generate one or more quality of service profiles, a quality of service profile comprises one or more quality of service parameters, and the one or more quality of service parameters comprise the protocol data unit set-based quality of service parameter and the QoS flow-based quality of service parameter; and
determining, by the policy control function network element, the one or more quality of service profiles based on the protocol data unit set-based quality of service requirement and the QoS flow-based quality of service requirement.

8. The method according to claim 7, wherein the first communication apparatus further comprises the session management function network element, and the method further comprises:
sending, by the policy control function network element to the session management function network element, the one or more quality of service profiles and the first information corresponding to the one or more quality of service profiles; and
sending, by the session management function to the second communication apparatus, the one or more quality of service profiles and the first information corresponding to the one or more quality of service profiles (which may be an index or may comprise an index and granularity/type information).

9. The method according to any one of claims 1 to 8, wherein the protocol data unit set-based quality of service parameter comprises one or more of the following:
a protocol data unit set delay budget, a protocol data unit set error rate, and protocol data unit set integrated handling information.

10. A quality of service parameter notification method, applied to a second communication apparatus, comprising:
receiving one or more quality of service profiles from a first communication apparatus, wherein one quality of service profile corresponds to one piece of first information and comprises one or more quality of service parameters, and the one or more quality of service parameters comprise a quality of service QoS flow-based quality of service parameter and a protocol data unit set-based quality of service parameter; and
sending the first information to the first communication apparatus.

11. The method according to claim 10, further comprising:
sending first indication information to the first communication apparatus, wherein the first indication information indicates that the second communication apparatus supports protocol data unit set-based quality of service handling.

12. The method according to claim 10, further comprising:
sending second indication information to the first communication apparatus, wherein the second indication information indicates that the second communication apparatus does not support protocol data unit set-based quality of service handling.

13. The method according to claim 10, wherein the first information indicates that a quality of service parameter used by the second communication apparatus is the quality of service QoS flow-based quality of service parameter in the one or more quality of service parameters comprised in the quality of service profile corresponding to the first information; or the first information indicates that the quality of service parameter used by the second communication apparatus is the protocol data unit set-based quality of service parameter in the one or more quality of service parameters comprised in the quality of service profile corresponding to the first information.

14. The method according to any one of claims 10 to 13, wherein the protocol data unit set-based quality of service parameter comprises one or more of the following:
a protocol data unit set delay budget, a protocol data unit set error rate, and protocol data unit set integrated handling information.

15. A quality of service parameter notification method, applied to a policy control function network element, comprising:
receiving third indication information from a session management function network element, wherein the third indication information indicates whether a second communication apparatus supports protocol data unit set-based quality of service handling; and
sending one or more quality of service profiles to the second communication apparatus, wherein one quality of service profile corresponds to one piece of first information and comprises one or more quality of service parameters, and the one or more quality of service parameters comprise a quality of service QoS flow-based quality of service parameter and/or a protocol data unit set-based quality of service parameter.

16. The method according to claim 15, wherein the third indication information indicates that the second communication apparatus does not support the protocol data unit set-based quality of service handling, and the one or more quality of service profiles comprise the QoS flow-based quality of service parameter; or
the third indication information indicates that the second communication apparatus supports the protocol data unit set-based quality of service handling, and the one or more quality of service profiles comprise the protocol data unit set-based quality of service parameter, or the one or more quality of service profiles comprise the protocol data unit set-based quality of service parameter and the QoS flow-based quality of service parameter.

17. The method according to claim 16, further comprising:
receiving, from the session management function network element, one or more of a quality of service parameter used by the second communication apparatus, a type of the quality of service parameter used by the second communication apparatus, or the first information, wherein the type of the used quality of service parameter comprises a QoS flow-based quality of service parameter type or a protocol data unit set-based quality of service parameter type.

18. A communication apparatus, comprising a unit configured to perform the method according to any one of claims 1 to 9, or comprising a unit configured to perform the method according to any one of claims 10 to 14, or comprising a unit configured to perform the method according to any one of claims 15 to 17.

19. A computer-readable storage medium, wherein the computer-readable storage medium stores computer-executable instructions, and when the computer-executable instructions are invoked by an electronic device, the electronic device is caused to perform the method according to any one of claims 1 to 9, or the electronic device is caused to perform the method according to any one of claims 10 to 14, or the electronic device is caused to perform the method according to any one of claims 15 to 17.

20. A communication system, comprising an apparatus configured to perform the method according to any one of claims 1 to 9 and an apparatus configured to perform the method according to any one of claims 10 to 14.

21. A chip system, wherein the chip system comprises:
a communication interface; and
a processor, configured to invoke the instructions through the communication interface and run the instructions, to cause a device on which the chip system is installed to perform the method according to any one of claims 1 to 9, or to cause a device on which the chip system is installed to perform the method according to any one of claims 10 to 14, or to cause a device on which the chip system is installed to perform the method according to any one of claims 15 to 17.

22. A computer program product, comprising computer-executable instructions, wherein when the computer-executable instructions are run on a computer, the computer is caused to perform the method according to any one of claims 1 to 9, or the electronic device is caused to perform the method according to any one of claims 10 to 14, or the electronic device is caused to perform the method according to any one of claims 15 to 17.
